# EUROPÄISCHE PATENTSCHRIFT

(11) **EP 3 328 640 B1**
(45) Veröffentlichungstag und Bekanntmachung des Hinweises auf die Patenterteilung: **19.02.2020**
(21) Anmeldenummer: 16748265.2
(22) Anmeldetag: 27.07.2016
(51) Int. Cl.: B32B 7/06, B32B 27/08, B32B 27/28, B32B 27/32, B65D 65/02, B65D 65/40, C08J 5/18, B65D 5/60, B32B 7/00, B32B 7/12, C08J 7/04, C09J 123/06, C09J 123/14, C09J 183/04, C08L 23/06, C08L 23/14

(54) **EINE LINEAR WEITERREISSBARE, MEHRSCHICHTIGE POLYOLEFINFOLIE**
A MULTILAYER POLYOLEFIN FILM CAPABLE OF LINEAR TEAR PROPAGATION
FILM MULTICOUCHE EN POLYOLÉFINE DÉCHIRABLE LINÉAIREMENT

(30) Priorität: 28.07.2015 DE 102015009546; 28.07.2015 DE 102015017119; 19.05.2016 DE 102016006065
(43) Veröffentlichungstag der Anmeldung: 06.06.2018
(73) Patentinhaber: Infiana Germany GmbH & Co. KG, 91301 Forchheim (DE)
(72) Erfinder: SCHUMANN, Michael, 90613 Grosshabersdorf (DE); SITZMANN, Stefan, 91356 Kirchehrenbach (DE); ZIRKEL, Larissa, 91058 Erlangen (DE); GERLACHER, Harald, 96117 Memmelsdorf (DE); SCHMIDT, Werner, 91301 Forchheim (DE)
(74) Vertreter: Kutzenberger Wolff & Partner
(86) Internationale Anmeldenummer: PCT/EP2016/001295
(87) Internationale Veröffentlichungsnummer: WO 2017/016660

(56) Entgegenhaltungen:
- WO-A1-2012/113535
- WO-A1-2015/139843
- DE-A1-102005 060 728
- US-A1- 2005 058 791

## Beschreibung

Die vorliegende Erfindung betrifft eine mehrschichtige Polyolefinfolie umfassend eine Schichtfolge aus einer siegelbare Schicht (a) basierend auf einer Polyethylen-Komponente mit einer Dichte im Bereich von 0,910 bis 0,940 g/cm³ und einem Schmelzpunkt im Bereich von 110 °C bis 130 °C, einer Schicht (b) basierend auf einer Polymermischung aus 51 - 85 Gew.-% wenigstens eines Polyethylens mit einer Dichte von 0,910 bis 0,940 g/cm³ und 15 - 49 Gew.-%, jeweils bezogen auf das Gesamtgewicht der Polymermischung, wenigstens eines Propylen-Homo- oder - Copolymeren, einer siegelbaren Schicht (c) basierend auf einer Polyethylen-Komponente mit einer Dichte im Bereich von 0,910 bis 0,940 g/cm³ und einem Schmelzpunkt im Bereich von 110 °C bis 130 °C, wobei der Schmelzpunkt der Schicht (a) bzw. der Schicht (c) um mindestens 5°C tiefer liegt als der Schmelzpunkt der Schicht (b) und wobei die Weiterreißfestigkeit der Polyolefinfolie in Maschinenrichtung [MD] ≤ 5 N beträgt und die Weiterreißfestigkeit quer zur Maschinenrichtung [CD] um mindestens das Vierfache höher ist als in [MD], jeweils gemessen nach DIN 53356, und die Zugfestigkeit ungefähr gleich groß in Maschinenrichtung [MD] wie quer zur Maschinenrichtung [CD] ist und ≥ 15 N, gemessen nach DIN ISO 527-3, beträgt, und daraus hergestellte Verpackungen für Lebensmittel oder Verpackungen für vorzugsweise einzelverpackte Hygieneprodukte oder einzeln verpackte Inkontinenzprodukte, die gegebenenfalls selbstklebefähig sind.

Es ist bekannt, dass Polyolefinfolien für viele Anwendungen eingesetzt werden können, wobei der Einsatz von Polyolefinfolien als Verpackungsmaterial einen beträchtlichen Anteil des Verbrauchs ausmacht. Bei diesem Einsatz werden üblicherweise durch Versiegeln verschlossene Verpackungen insbesondere für den Lebensmittelbereich hergestellt, wodurch oftmals kein problemloses Öffnen der Verpackungen möglich ist. Dabei ist von besonderer Bedeutung, dass insbesondere für komplett verschlossene Verpackungen ein Öffnen der Verpackung nur durch Aufreißen einer der Siegelnähte gegeben ist, wodurch das verpackte Gut leicht verschüttet werden kann. Dies kann auch bei komplett verschlossenen Verpackungen passieren, die bereits eine Öffnungshilfe, d.h. einer Markierung der Aufreißrichtung zum Öffnen der Verpackung außerhalb eines Siegelnahtbereiches aufweisen. Wenn nämlich die als Verpackungsmaterial zum Einsatz kommende Verpackungsfolie zwar in die markierte Aufreißrichtung eine geringere Weiterreißfestigkeit als quer zu dieser Richtung aufweist, aber der Öffnungsriss nicht kontrolliert, sondern vielmehr mit nicht tolerierbaren Abweichungen von einem geraden, linearen Riss verläuft. Dadurch ist auch bei diesen Verpackungen eine unkomplizierte Handhabung und Entnahme des verpackten Gutes wie z.B. eines verpackten Lebensmittels, ohne etwas zu verstreuen oder zu verschütten, oder eine Portionierung von z.B. tiefgefrorenen Lebensmitteln schwierig.

Darüber hinaus muss das Verpackungsmaterial für viele Verpackungen auch ausreichend hohe mechanische Eigenschaften, wie eine möglichst hohe Durchstoßfestigkeit und Siegelnahtfestigkeit aufweisen, um die Handhabung der aus den entsprechenden Verpackungsfolien hergestellten Verpackungen zu erleichtern. Dies gilt insbesondere deshalb, weil das verpackte Gut üblicherweise während der Lagerung und beim Transport übereinander geschichtet oder gestapelt wird und die Verpackungen dabei nicht durchgestoßen werden dürfen. Dies gilt selbstverständlich auch für die Tiefkühllagerung, um den Anteil der Ausschussware möglichst gering zu halten.

Es besteht daher ein Bedarf, eine Verpackungsfolie zur Verfügung zu stellen, die sich neben ausreichend guten mechanischen Eigenschaften durch ein leichtes, gerades und lineares Weiterreißverhalten beim Öffnen einer daraus hergestellten Verpackung auszeichnet.

Aufgabe der vorliegenden Erfindung war es daher, eine Polyolefinfolie geeignet als Verpackungsfolie zur Verfügung zu stellen, die ein weitgehend problemloses Öffnen einer aus der Verpackungsfolie hergestellten Verpackung ohne Aufreißen einer Siegelnaht gewährleistet und eine problemlose Handhabung solcher Verpackungen ermöglicht.

Diese Aufgabe wird durch die Bereitstellung der erfindungsgemäßen, mehrschichtigen Polyolefinfolie umfassend eine Schichtfolge aus
a) einer siegelbare Schicht (a) basierend auf einer Polyethylen-Komponente mit einer Dichte im Bereich von 0,910 bis 0,940 g/cm³ und einem Schmelzpunkt im Bereich von 110 °C bis 130 °C,
b) einer Schicht (b) basierend auf einer Polymermischung aus 51 - 85 Gew.-% wenigstens eines Polyethylens mit einer Dichte von 0,910 bis 0,940 g/cm³ und 15 - 49 Gew.-%, jeweils bezogen auf das Gesamtgewicht der Polymermischung, wenigstens eines Propylen-Homo- oder -Copolymeren,
c) einer siegelbaren Schicht (c) basierend auf einer Polyethylen-Komponente mit einer Dichte im Bereich von 0,910 bis 0,940 g/cm³ und einem Schmelzpunkt im Bereich von 110 °C bis 130 °C,
wobei der Schmelzpunkt der Schicht (a) bzw. der Schicht (c) um mindestens 5°C tiefer ist als der Schmelzpunkt der Schicht (b) und
wobei die Weiterreißfestigkeit in Maschinenrichtung [MD] ≤ 5 N beträgt und die Weiterreißfestigkeit quer zur Maschinenrichtung [CD] um mindestens das Vierfache höher als in [MD] jeweils gemessen nach DIN 53356 ist, und die Zugfestigkeit ungefähr gleich groß in Maschinenrichtung wie quer zur Maschinenrichtung ist und ≥ 15 N, gemessen nach DIN ISO 527-3, beträgt, gelöst.

Die erfindungsgemäße, mehrschichtige Polyolefinfolie hat vorzugsweise eine Gesamtdicke von 30 - 120 µm, vorzugsweise von 50 - 100 µm.

Der Begriff "Schichtfolge" bedeutet im Sinne der Erfindung, dass die Schichten (a), (b) und (c) in der aufgeführten Reihe und direkt aneinandergrenzend vorliegen. Zusätzliche Schichten bzw. Beschichtungen können ggf. auf einer Oberfläche der Schichtfolge vorhanden sein wie z.B. eine Releasebeschichtung, vorzugsweise aus ausgehärtetem Polysiloxan.

Die Schicht (a) bzw. die Schicht (c) hat jeweils vorzugsweise eine Schichtdicke von 5 - 30 µm und die Schicht (b) eine Schichtdicke von 20 - 90 µm.

Da die ggf. vorhandene Releasebeschichtung höchstens eine Dicke von 1 - 2 µm aufweist, wird sie nicht als eine Schicht bezeichnet.

Vorzugsweise besteht die erfindungsgemäße Polyolefinfolie zumindest zu 95 Gew.-% aus C₂-C₈ Olefinpolymeren, deren Mischungen oder deren Copolymeren und ggf. aus den in der Beschreibung noch aufgeführten Hilfsstoffen. Die erfindungsgemäße Polyolefinfolie umfasst kein Polybutylen.

Die erfindungsgemäße Polyolefinfolie umfasst auch keine cyclischen Olefinpolymere oder Copolymere.

Die erfindungsgemäße Polyolefinfolie weist keine Metall-Lage wie eine Metallfolie auf, die z.B. durch Elektroden-Zerstäubung oder aus der Dampfphase aufgebracht worden ist.

Vorzugsweise basiert die Schicht (a) bzw. die Schicht (c) der erfindungsgemäßen Polyolefinfolie auf einer Polyethylen-Komponente mit einer Dichte im Bereich von 0,915 bis 0,940 g/cm³ und einem Schmelzpunkt im Bereich von 113 °C bis 130 °C und ist vorzugsweise heißsiegelbar.

Unter dem Begriff "Polyethylen-Komponente" werden wenigsten ein Polyethylen mit niedriger Dichte (LDPE), wenigstens ein lineares Polyethylen niedriger Dichte (LLDPE) oder einer Mischung aus LDPE und LLDPE verstanden.

Der Begriff "Polyethylen mit einer niedrigen Dichte" im Sinne der Erfindung ist gleichbedeutend mit dem Begriff "Polyethylen niedriger Dichte" bzw. "LDPE", d.h. mit diesem Begriff wird unverschäumtes Polyethylen niedriger Dichte bezeichnet, welches sich durch einen hohen Verzweigungsgrad der Moleküle auszeichnet, d.h. die Polyethylen-Hauptkette trägt 8 bis 40 Seitenketten aus wiederkehrenden EthylenEinheiten und weist keine polymerisierten Einheiten weiterer Olefine auf. Die zum Aufbau der Schichten (a) bis (c) zum Einsatz kommenden Polyethylene mit einer niedrigen Dichte weisen vorzugsweise eine Dichte im Bereich von 0,915 bis 0,940 g/cm³, besonders bevorzugt von 0,915 bis 0,938 g/cm³ auf.

Die Polyethylen-Komponente der Schicht (a) bzw. der Schicht (c) kann auch aus einem linearen Polyethylen mit einer niedrigen Dichte bestehen.

Der Begriff "lineares Polyethylen mit einer niedrigen Dichte" im Sinne der Erfindung ist gleichbedeutend mit dem Begriff "lineares Polyethylen niedriger Dichte" bzw. "LLDPE", d.h. mit diesem Begriff wird unverschäumtes, lineares Polyethylen niedriger Dichte bezeichnet, welches einen geringen Verzweigungsgrad der Moleküle aufweist und vorzugsweise eine Dichte im Bereich von 0,920 bis 0,940 g/cm³ aufweist und vorzugsweise neben dem Ethylen wenigstens ein α-Olefin mit 4-8 Kohlenstoffatomen, insbesondere Hexen und/oder Octen, als Comonomeres aufweist.

Vorzugsweise besteht die Polyethylen-Komponente der Schicht (a) oder der Schicht (c) aus einer Mischung von 55 - 80 Gew.-% LDPE und 45 - 20 Gew.-% LLDPE, besonders bevorzugt aus 65 - 75 Gew.-% LDPE und 35 - 25 Gew.-% LLDPE.

Der Schmelzpunkt der Polyethylen-Komponente der Schicht (a) bzw. der Schicht (c) liegt im Bereich von 110 °C bis 130 °C und ist um mindestens 5 °C tiefer als der Schmelzpunkt der Schicht (b).

Unter dem Begriff "basierend auf" wird erfindungsgemäß "ist aufgebaut aus" verstanden.

Die Schicht (a) und die Schicht (c) können identisch oder unterschiedlich aufgebaut sein. Dabei können sich die beiden Schichten in der Dicke oder Zusammensetzung unterscheiden, wobei aber eine identische Zusammensetzung dieser beiden Schichten bevorzugt ist. Dies gilt auch für die jeweilige Schichtdicke.

Dies bedeutet, dass in einer bevorzugten Ausführungsform der erfindungsgemäßen, mehrschichtigen Polyolefinfolie die Schicht (a) und die Schicht (c) einen identischen Schichtaufbau, vorzugsweise eine identische Schichtdicke und/oder eine identische Zusammensetzung aufweisen.

Die Schicht (b) basiert auf einer Polymermischung aus 51-85 Gew.-% von wenigstens einem Polyethylen mit einer Dichte von 0,910 bis 0,940 g/cm³ und 15-49 Gew.-%, jeweils bezogen auf das Gesamtgewicht der Polymermischung, von wenigstens einem Propylen-Homo- oder Copolymeren.

Das zum Aufbau der Schicht (b) in der Polymermischung vorliegende Polyethylen ist vorzugsweise wenigsten ein Polyethylen niedriger Dichte (LDPE) oder wenigstens ein lineares Polyethylen niedriger Dichte (LLDPE) oder eine Mischung aus LDPE und aus LLDPE. Sofern eine Mischung aus LDPE und LLDPE zum Einsatz kommt, beträgt das Mischungsverhältnis bevorzugt 30:70 Gew.-% bis 70:30 Gew.-% LDPE zu LLDPE.

Zum Aufbau der Schicht (b) eignet sich als zweite Polymerkomponente der Polymermischung ein Propylenhomopolymer oder Propylen(Block-)copolymer. Als Propylenhomopolymer kann vorzugsweise ein isotaktisches Propylenhomopolymer mit einem Schmelzpunkt von 140 bis 170 °C, vorzugsweise von 150 bis 165 °C eingesetzt werden. Als Polypropylencopolymeres eignet sich vorzugsweise ein Copolymeres von Propylen und von bis zu 20 Gew.-%, vorzugsweise ≤ 15 Gew.-% Ethylen, wobei besonders bevorzugt ein Propylen/Ethylen-Block-Copolymeres mit mindestens 3 Gew.-%, besonders bevorzugt mit 4 Gew.-%, bis 10 Gew.-% Ethylen, zum Einsatz kommen kann.

Als Polymermischung für die Schicht (b) wird vorzugsweise eine Mischung aus einem LDPE und einem Propylen/Ethylen-Block-Copolymeren oder eine Mischung aus einem LLDPE und einem Propylen/Ethylen-Block-Copolymeren verwendet. Bevorzugt kann auch als eine Polymermischung für die Schicht (b) eine Mischung aus LDPE und einem Propylenhomopolymer oder eine Mischung aus LLDPE und einem Propylenhomopolymer eingesetzt werden.

Die erfindungsgemäße, mehrschichtige Polyolefinfolie zeichnet sich durch eine Weiterreißfestigkeit in Maschinenrichtung (MD) von ≤ 5 N, vorzugsweise ≤ 3 N aus, wobei die Weiterreißfestigkeit quer zur Maschinenrichtung (CD) um mindestens das Vierfache höher ist als in (MD), jeweils gemessen nach DIN 53356, und die Zugfestigkeit sowohl in Maschinenrichtung als auch quer zur Maschinenrichtung ungefähr denselben Wert, vorzugsweise jeweils ≥ 15 N, besonders bevorzugt ≥ 20 N aufweist. Darüber hinaus weist die erfindungsgemäße Polyolefinfolie ausgezeichnete Durchstoßfestigkeits-Werte auf.

Die Schichten der erfindungsgemäßen, mehrschichtigen Polyolefinfolie können jeweils dieselben oder unterschiedliche Additive bzw. Hilfsmittel ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Weichmacher, Silane, Abstandshalter, Füllstoffe, wie CaCO3, Silikate, Peel-Additive, Siegel-Additive, Wachse, Benetzungsmittel, oberflächenaktive Verbindungen, vorzugsweise Tenside, und Dispergiermittel aufweisen.

Die Schichten der erfindungsgemäß zum Einsatz kommenden Kunststofffolie können wenigstens 0,01-15 Gew.-%, vorzugsweise wenigstens 0,1-10 Gew.-%, jeweils bezogen auf das Gesamtgewicht einer einzelnen Schicht, wenigstens eines der vorstehend genannten Additive enthalten.

Die erfindungsgemäße Polyolefinfolie kann zur Erzielung einer Trennwirkung eine Releasebeschichtung (d) auf einer ihrer Außenschichten aufweisen.

Vorzugsweise basiert die Releasebeschichtung auf einer ausgehärteten Polysiloxan-Beschichtung, die auf einer Oberfläche der erfindungsgemäßen Verpackungsfolie im Wesentlichen vollflächig, vorzugsweise mit Ausnahme bis auf wenigstens einen in Maschinenrichtung verlaufenden Streifen oder teilflächig, vorzugsweise als rapportgenauer Querstreifen aufgetragen wird.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert die ausgehärtete Polysiloxan-Beschichtung auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist die erfindungsgemäße Polysiloxan-Beschichtung eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten (-[Si(R₂)-O]-)ₙ in der Polysiloxankette wird als Polymerisationsgrad des Polysiloxans bezeichnet.

Die ggf. vorhandene, ausgehärtete Polysiloxan-Beschichtung der erfindungsgemäßen Polyolefinfolie basiert vorzugsweise auf wenigstens einem ausgehärteten, d.h. vernetzten Polysiloxan ausgewählt aus der Gruppe umfassend additionsvernetzte, vorzugsweise metallkatalysiert additionsvernetzte, kondensationsvernetzte, radikalisch vernetzte und/oder kationisch vernetzte Polysiloxane.

Besonders bevorzugt basiert die Polysiloxan-Beschichtung auf wenigstens einem ausgehärteten Polysiloxan, das durch thermische Aushärtung und/oder unter Einwirkung von UV-Strahlung, ausgehärtet wurde. Bevorzugt basiert die Polysiloxan-Beschichtung (d) auf wenigstens einem ausgehärteten Polysiloxan ausgewählt aus der Gruppe umfassend Polydialkylsiloxane, vorzugsweise Polydimethylsiloxane, und Polyalkylarylsiloxane, vorzugsweise Polymethylphenylsiloxane, die jeweils ausgehärtet sind. Thermisch ausgehärtete Polysiloxane können durch thermische Hydrosilylierung von Silan-Funktionen aufweisenden Polysiloxanen mit einer zumindest eine Kohlenstoff-Doppelbindung aufweisenden Verbindung erhalten werden. Die UV-Aushärtung erfolgt wie thermische Aushärtung nach der Herstellung der erfindungsgemäßen Polyolefinfolie, wobei eine UV-Aushärtung erfindungsgemäß besonders bevorzugt ist.

Prinzipiell kann die erfindungsgemäße Polyolefinfolie nach bekannten Herstellungsverfahren wie z.B. durch Extrusion oder durch Co-Extrusion hergestellt werden.

Dabei können sowohl einzelne als auch sämtliche Schichten der erfindungsgemäßen, mehrschichtigen Polyolefinfolie durch Extrusion, insbesondere durch Blasfolien-Extrusion und/oder Flachfolien-Extrusion (Cast-Extrusion), oder Co-Extrusion, vorzugsweise Blasfolien-Co-Extrusion und/oder Flachfolien-Co-Extrusion (Cast-Co-Extrusion) hergestellt werden, wobei Blasfolien-(Co)-Extrusion bevorzugt ist. Dabei ist zu beachten, dass im Fall einer Dotierung der Schicht(en) mit Additiven, diese durch Abmischen, ggf. als Masterbatch, mit der oder den PolymerKomponente(n) der jeweiligen Schicht zur Verarbeitung eingesetzt werden. Dieses Abmischen kann in Granulat/Pulver- oder Granulat/Granulat-Form trocken erfolgen. Es ist aber auch möglich, das Additiv dem oder den aufgeschmolzenen PolymerKomponente(n) der jeweiligen Schicht zuzugeben, vorzugsweise durch Zudosierung in einem für die Extrusion der jeweiligen Schicht verwendeten Extruder.

Bei der Herstellung durch Extrusion werden die den einzelnen Schichten der erfindungsgemäßen Polyolefinfolie entsprechenden Schmelzen gleichzeitig und gemeinsam durch eine Runddüse oder eine Flachdüse (co)extrudiert, die so erhaltene Folie bei Nutzung einer Runddüse mittels Luft, vorzugsweise mit einem Aufblasverhältnis von mindestens 1 : 1, besonders bevorzugt von mindestens 1,5 : 1 ganz besonders bevorzugt von mindestens 2 : 1, aufgeblasen und gekühlt oder bei Nutzung einer Flachdüse zur Verfestigung mit Hilfe von Walzen abgezogen und gekühlt.

In einer weiteren Ausführungsform kann die Polyolefinfolie auch als Laminat umfassend die coextrudierte Schichtfolge (a)-(c) produziert werden.

In einer weiteren bevorzugten Ausführungsform liegt die gesamte Mehrschichtfolie in Form eines vorzugsweise coextrudierten Folienschlauches vor, die ggf. zu einer flachgelegten Folie verarbeitet werden kann.

Besonders bevorzugt wird die erfindungsgemäße Polyolefinfolie als eine Mehrschicht-Blasfolie, bevorzugt durch Extrusion, insbesondere durch Blasfolien-Coextrusion hergestellt.

In einer weiteren Ausführungsform kann die erfindungsgemäße Polyolefinfolie teilweise oder insgesamt als eine Castfolie hergestellt und verarbeitet werden.
Die Polyolefinfolie ist vorzugsweise nicht gereckt oder kann monoaxial in MD gereckt sein.

Dabei kann die als Castfolie hergestellte Polyolefinfolie monoaxial in einem Reckverhältnis von mindestens 1:1,5, bevorzugt von mindestens 1: 2, besonders bevorzugt 1 : 2 bis 1 : 5 gereckt sein.

Anschließend kann ggf. auf zumindest eine Oberfläche der erfindungsgemäßen Polyolefinfolie gegebenenfalls nach Zwischenlagerung eine Releasebeschichtung aufgetragen werden.

Die erfindungsgemäße Polyolefinfolie kann geprägt sein und eine einseitige Prägestruktur auf einer ihrer Oberflächen-Schichten oder eine durchgehende Prägestruktur aufweisen. Die Prägeverfahren sind dem Fachmann bekannt.

Ein weiterer Gegenstand der Erfindung ist daher die Verwendung einer erfindungsgemäßen Polyolefinfolie als Verpackungsmaterial.

Die erfindungsgemäße Polyolefinfolie eignet sich insbesondere zur Herstellung einer Verpackung, vorzugsweise einer Beutelverpackung, einer Einzelportionsverpackung, eines Sachets oder eines Stickpacks.

Ein weiterer Gegenstand der Erfindung ist daher die Verwendung einer erfindungsgemäßen Polyolefinfolie zur Herstellung einer Verpackung, vorzugsweise einer Beutelverpackung, einer Einzelportionsverpackung, eines Sachets oder eines Stickpacks.

Die erfindungsgemäße Polyolefinfolie wird vorzugsweise zur Herstellung von leicht zu öffnenden Verpackungen verwendet, da sie in Maschinenrichtung eine weit geringere Weiterreißfestigkeit als quer zur Maschinenrichtung aufweist. Dadurch kann aus einer solchen Verpackung das verpackte Gut problemlos entnommen werden, da es beim Auf- und Weiterreißen der Verpackung zu einem geraden, linearen Verlauf des Risses kommt. Die Gefahr eines Verschüttens oder Verstreuens des verpackten Gutes ist damit minimiert.

Ein Gegenstand der vorliegenden Erfindung ist eine leicht zu öfnende Verpackung aus einer erfindungsgemäßen Polyolefinfolie.

Solche erfindungsgemäße Verpackungen zeichnen sich insbesondere auch dadurch aus, dass sie neben dem leichten und geraden Weiterreißverhalten leicht zu öffnen sind ohne dass eine Siegelnaht einer Verpackung aufgerissen werden muss. Für die Aufreißrichtung einer erfindungsgemäßen Verpackung kann ggf. auch eine Kerbe oder Schwächung in Richtung der geringeren Weiterreißfestigkeit der erfindungsgemäßen Polyolefinfolie angebracht werden. Wenn eine Kerbe oder Schwächung angebracht wird, so sollte diese vorzugsweise im Siegelnahtbereich vorliegen. In einer bevorzugten Ausführungsform ist dabei die Siegelnahtfestigkeit der Nähte der erfindungsgemäßen Verpackung höher als die Weiterreißfestigkeit in der markierten Aufreißrichtung.

Die erfindungsgemäßen Verpackungen zeichnen sich ferner dadurch aus, dass sie hohe Durchstoßfestigkeit-Werte haben, wodurch sie sehr gut zu handhaben sind, d. h. dass sie bei Lagerung, Transport und Verkauf durch Einwirkung von Stößen im Vergleich zu Folien mit ähnlichem Weiterreißverhalten weniger leicht beschädigt werden können.

In einer anderen bevorzugten Ausführungsform eignet sich eine erfindungsgemäße Polyolefinfolie auch als Trennfolie.

Ein weiterer Gegenstand der Erfindung ist daher die Verwendung einer erfindungsgemäßen Polyolefinfolie als Trennfolie, insbesondere mit einer Releasebeschichtungen als Oberflächenbeschichtung.

Da es bei solchen Anwendungen u.a. darauf ankommt, dass die Trennfolie ggf. mit dem geschützten Substrat in der gewünschten Länge leicht und in einem geraden, linearen Verlauf abgetrennt werden kann, ist die erfindungsgemäße Polyolefinfolie aufgrund ihres besonderen monoaxialen Ab- bzw. Weiterreißverhaltens als Trenn- und Schutzfolie besonders geeignet.

Ein weiterer Gegenstand der vorliegenden Erfindung ist daher die Verwendung der erfindungsgemäßen Polyolefinfolie als ablösbare Trennfolie oder Schutzfolie, vorzugsweise für Artikel jeder Art, besonders bevorzugt für selbstklebefähige Artikel jeder Art.

Unter anderem ist daher der Einsatz der erfindungsgemäßen Polyolefinfolie als ablösbare Verpackungs- und/oder Schutzfolie für selbstklebende Etiketten oder Klebebänder jeder Art, insbesondere in der Bauindustrie, ist ein weiterer Gegenstand der vorliegenden Erfindung.

Ein besonders bevorzugter Einsatz der erfindungsgemäßen Polyolefinfolie mit einer Releasebeschichtung ist der Einsatz als vorzugsweise ablösbare, flexible Verpackungs- und/oder Schutzfolie für Hygieneartikel, vorzugsweise einzeln verpackte, gegebenenfalls gefaltete, ggf. selbstklebefähige Slipeinlagen, Damenbinden oder Inkontinenzartikel. Dementsprechend liegt die erfindungsgemäße Polyolefinfolie als eine vorzugsweise ablösbare Einschlagverpackung, vorzugsweise für die aufgeführten, ggf. selbstklebefähigen Hygieneartikel, vorzugsweise Damenbinden Slipeinlagen oder Inkontinenzartikel, die vorzugsweise einzeln verpackt in der erfindungsgemäßen Einschlagverpackung vorliegen.

### A. Messung der Zugfestigkeit

Von jeder Polyolefinfolie, die aus den in der Tabelle II angegebenen Polymermischungen hergestellt wurden, wurde die Zugfestigkeit in Maschinenrichtung (MD) und quer zur Maschinenrichtung (CD) nach DIN EN ISO 527-3 bestimmt.

Bei einer Probenbreite von 15 mm wurde bei einer Messgeschwindigkeit von 500 mm/min die maximale Kraft in N bestimmt.

### B. Messung der Dicke

Die Messung der Dicke der jeweiligen Polyolefinfolie wurde nach DIN 53370 ermittelt und als Mittelwert angegeben.

### C. Messung der Weiterreißfestigkeit

Die Messung der Weiterreißfestigkeit von jeder erfindungsgemäßen bzw. Vergleichs-Polyolefinfolie erfolgte nach DIN 53 356, wobei die Messung an einer Probengröße von 100 mm x 50 mm mit einer Messgeschwindigkeit von 300 mm/min über eine Messlänge von 30 mm durchgeführt wurde und die Initialwerte bei der Auswertung vernachlässigt wurden. Es wurde die Weiterreißfestigkeit in Maschinenrichtung (MD) als auch quer zur Maschinenrichtung (CD) ermittelt.

Die sowohl in Maschinenrichtung (MD) als auch quer zur Maschinenrichtung (CD) ermittelten Werte sowohl für die Zugfestigkeit als auch für die Weiterreißfestigkeit wurden in der nachfolgenden Tabelle III jeweils für die entsprechenden Polyolefinfolien angegeben.

### D. Bestimmung der Durchstoßfestigkeit

Die Durchstoßfestigkeit der erfindungsgemäßen und der Vergleichspolyolefinfolien wurde nach ASTM E 154-88 Teil 10 bestimmt und in [N] angegeben.

Die ermittelten Durchstoßfestigkeits-Werte werden nachfolgend in Tabelle IV angegeben.

### E. Bestimmung des geraden, linearen Weiterreißverhaltens

Die Beurteilung eines geraden, linearen Weiterreißverhalten der erfindungsgemäßen bzw. Vergleichs-Polyolefinfolien erfolgt durch Messung der Abweichung von einem geraden, linearen Verlauf beim Reißen (Weiter- bzw. Abreißen). Diese wird in [mm] angegeben.

Aus den Polyolefinfolien, deren Weiterreißverhalten ermittelt werden soll, werden jeweils 10 Proben derart zugeschnitten, dass sie eine Länge von 100 mm parallel zur Maschinenrichtung (MD) und eine Breite von 50 mm quer zur Maschinenrichtung (CD) aufweisen. Ferner werden 10 Proben derart zugeschnitten, dass sie eine Länge von 100 mm quer zur Maschinenrichtung (CD) und eine Breite von 50 mm parallel zur Maschinenrichtung (MD) aufweisen.

Die einzelnen Proben werden jeweils in der Mitte der Breitseite fadengerade und parallel zur Längsseite 50 mm eingeschnitten und unterhalb des Einschnitts mittig und parallel zur Längsseite mit einem doppelseitigen Klebeband mit einer Breite von 20 mm und einer Länge von 90 mm versehen. Mittels eines Markers wird eine lineare Verlängerungslinie des Einschnitts aufgemalt, welche als gerade, lineare Reißlinie zum Messen der Abweichung dient.

Die Bestimmung des Reißverhaltens der einzelnen Proben wird bei Normalklima (DIN 50014-23/50-2) durchgeführt. Dazu wird ein Schenkel der einzelnen Proben jeweils mit Hilfe des aufgeklebten doppelseitigen Klebebandes in einem definierten Winkel von 45°C [β] auf einer Metallschiene mit einer Breite von 100 mm und einer Länge von 350 mm fixiert.

Die Metallschiene wird in die untere Spannklemme eines elektronischen Zerreißgerätes (Zwick) eingespannt. Das eingeschnittene Ende des nicht fixierten Schenkels ("das nicht fixierte Hosenbein") der einzelnen Proben wird mit Hilfe eines doppelseitigen Klebebandes an einem ca. 400 mm langen, steifen Folienstreifen fixiert und dieser wird in die obere Spannklemme des Zerreißgerätes eingespannt.

Die beiden Schenkel der einzelnen Proben werden nun bis zur vollständigen Teilung der Probe unter einem Winkel von 175° und mit einer Geschwindigkeit von 500 mm/min auseinandergezogen.

Für die Beurteilung des linearen Weiterreißverhaltens der Proben wird die maximale Abweichung A des Risses in mm gegenüber der Markierungslinie (gerader, linearer Riss in Verlängerung des Einschnitts) am Probenende ermittelt.

Aus den gemessenen maximalen Abweichungen A der 10 Proben mit den Maßen 100 mm (MD) x 50 mm (CD) wird der Mittelwert gebildet. Dieser dient zur Beurteilung des linearen Reißverhaltens in Maschinenrichtung (MD).

Dementsprechend wird aus den gemessenen maximalen Abweichungen A der 10 Proben mit den Maßen 100 mm (CD) x 50 mm (MD) ebenfalls der Mittelwert gebildet. Dieser dient zur Beurteilung des linearen Reißverhaltens quer zur Maschinenrichtung (CD).

Die ermittelten Werte werden nachfolgend in der Tabelle IV angegeben.

### F. Herstellung der erfindungsgemäßen Polyolefinfolien sowie der mehrschichtigen Vergleichsfolien gemäß Tabelle II

Die Polyolefinfolien gemäß den Vergleichsbeispielen als auch der Beispiele gemäß Tabelle II bestehen jeweils aus drei Schichten und weisen die angegebene Dicke auf. Die einzelnen Schichten jeder Polyolefinfolie grenzen jeweils in der Reihenfolge unmittelbar aneinander an, in der sie nachstehend aufgeführt sind. Die Polyolefinfolien wurden jeweils durch Blasfolien-Co-Extrusion hergestellt. Das Aufblasverhältnis betrug jeweils 3 : 1.

### I. Chemische Charakterisierung der eingesetzten Rohstoffe:

| **Bezeichnung** | **Beschreibung** | **Schmelzpunkt Tm [°C]** | **Vicat Temperatur (A50-50°C/10 N) [°C]** | **Dichte [g/cm3]** |
|---|---|---|---|---|
| LDPE I | (low density) Polyethylen mit niedriger Dichte (LDPE) | 111 | 96 | 0,923 |
| LLDPE I | lineares Ethylen-Hexen-Copolymer mit niedriger Dichte(LLDPE) | 128 | 121 | 0,936 |
| LLDPE II | lineares Ethylen-Octen-Copolymer mit niedriger Dichte (LLDPE) | 122 | 108 | 0,92 |
| PP copo | Propylen/Ethylen(15 Gew.-%)-Block-Copolymer | 163 | 150 | 0,9 |

### II. Beispiele und Vergleichsbeispiele :

Die Beispiele B1 bis B6 sind erfindungsgemäße Beispiele. Die Beispiele B7 und B8 sowie V1 bis V3 sind Vergleichsbeispiele.

**Beispiel B1**

| B1 | Schichtdicke [µm] | Material |
|---|---|---|
| Schicht (a) | 12,5 | 70% LDPE + 30% LLDPE I |
| Schicht (b) | 25 | 67% LDPE + 33% PP copo |
| Schicht (c) | 12,5 | 70% LDPE + 30% LLDPE I |

**Beispiel B2**

| B2 | Schichtdicke [µm] | Material |
|---|---|---|
| Schicht (a) | 12,5 | 70% LDPE + 30% LLDPE I |
| Schicht (b) | 25 | 82% LDPE + 18% PP copo |
| Schicht (c) | 12,5 | 70% LDPE + 30% LLDPE I |

**Beispiel B3**

| B3 | Schichtdicke [µm] | Material |
|---|---|---|
| Schicht (a) | 12,5 | 70% LDPE + 30% LLDPE I |
| Schicht (b) | 25 | 51% LDPE + 49% PP copo |
| Schicht (c) | 12,5 | 70% LDPE + 30% LLDPE I |

**Vergleichsbeispiel V1**

| V1 | Schichtdicke [µm] | Material |
|---|---|---|
| Schicht (a) | 12,5 | 70% LDPE + 30% LLDPE I |
| Schicht (b) | 25 | 100% LDPE |
| Schicht (c) | 12,5 | 70% LDPE + 30% LLDPE I |

**Beispiel B4**

| B4 | Schichtdicke [µm] | Material |
|---|---|---|
| Schicht (a) | 12,5 | 70% LDPE + 30% LLDPE I |
| Schicht (b) | 25 | 67% LLDPE II + 33% PP copo |
| Schicht (c) | 12,5 | 70% LDPE + 30% LLDPE I |

**Beispiel B5**

| B5 | Schichtdicke [µm] | Material |
|---|---|---|
| Schicht (a) | 12,5 | 70% LDPE + 30% LLDPE I |
| Schicht (b) | 25 | 82% LLDPE II + 18% PP copo |
| Schicht (c) | 12,5 | 70% LDPE + 30% LLDPE I |

**Beispiel B6**

| B6 | Schichtdicke [µm] | Material |
|---|---|---|
| Schicht (a) | 12,5 | 70% LDPE + 30% LLDPE I |
| Schicht (b) | 25 | 51% LLDPE II + 49% PP copo |
| Schicht (c) | 12,5 | 70% LDPE + 30% LLDPE I |

**Vergleichsbeispiel V2**

| V2 | Schichtdicke [µm] | Material |
|---|---|---|
| Schicht (a) | 12,5 | 70% LDPE + 30% LLDPE I |
| Schicht (b) | 25 | 100% LLDPE II |
| Schicht (c) | 12,5 | 70% LDPE + 30% LLDPE I |

**Beispiel B7**

| B7 | Schichtdicke [µm] | Material |
|---|---|---|
| Schicht (a) | 22,5 | 70% LDPE + 30% LLDPE I |
| Schicht (b) | 45 | 82% LDPE + 18% PP copo |
| Schicht (c) | 22,5 | 70% LDPE + 30% LLDPE I |

**Beispiel B8**

| B8 | Schichtdicke [µm] | Material |
|---|---|---|
| Schicht (a) | 22,5 | 70% LDPE + 30% LLDPE I |
| Schicht (b) | 45 | 51% LDPE + 49% PP copo |
| Schicht (c) | 22,5 | 70% LDPE + 30% LLDPE I |

**Vergleichsbeispiel V3**

| V3 | Schichtdicke [µm] | Material |
|---|---|---|
| Schicht (a) | 22,5 | 70% LDPE + 30% LLDPE I |
| Schicht (b) | 45 | 100% LDPE |
| Schicht (c) | 22,5 | 70% LDPE + 30% LLDPE I |

### III. Messergebnisse

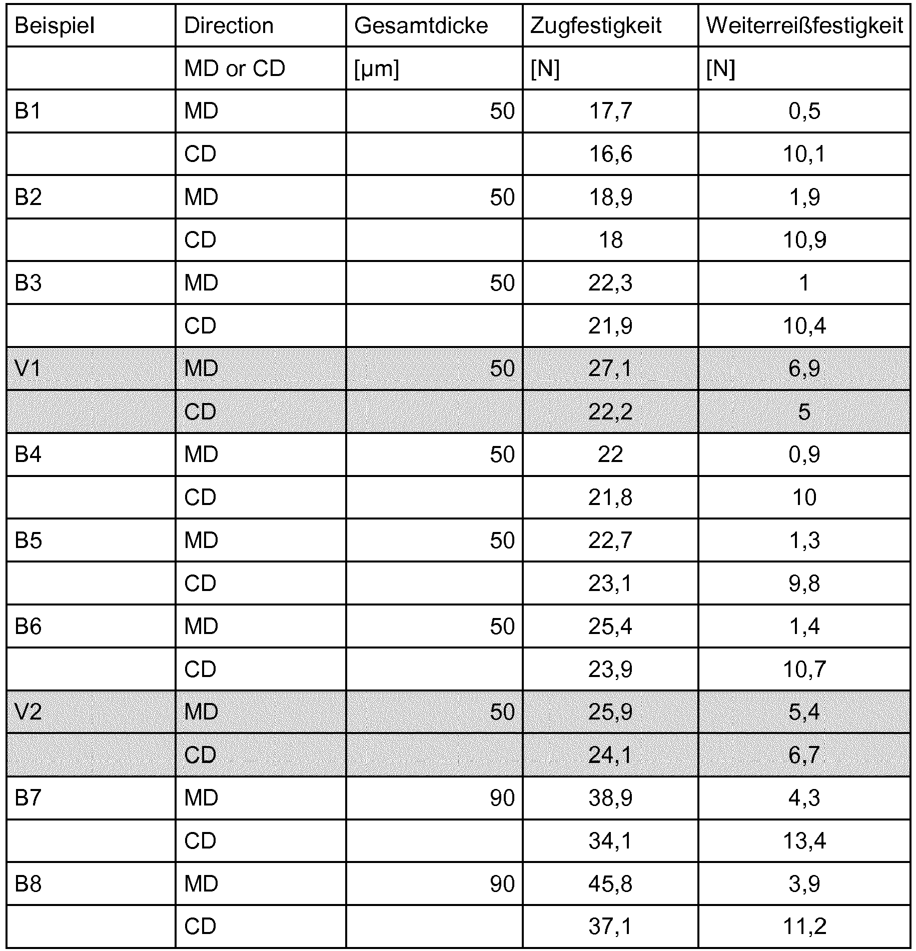

### IV. Messergebnisse

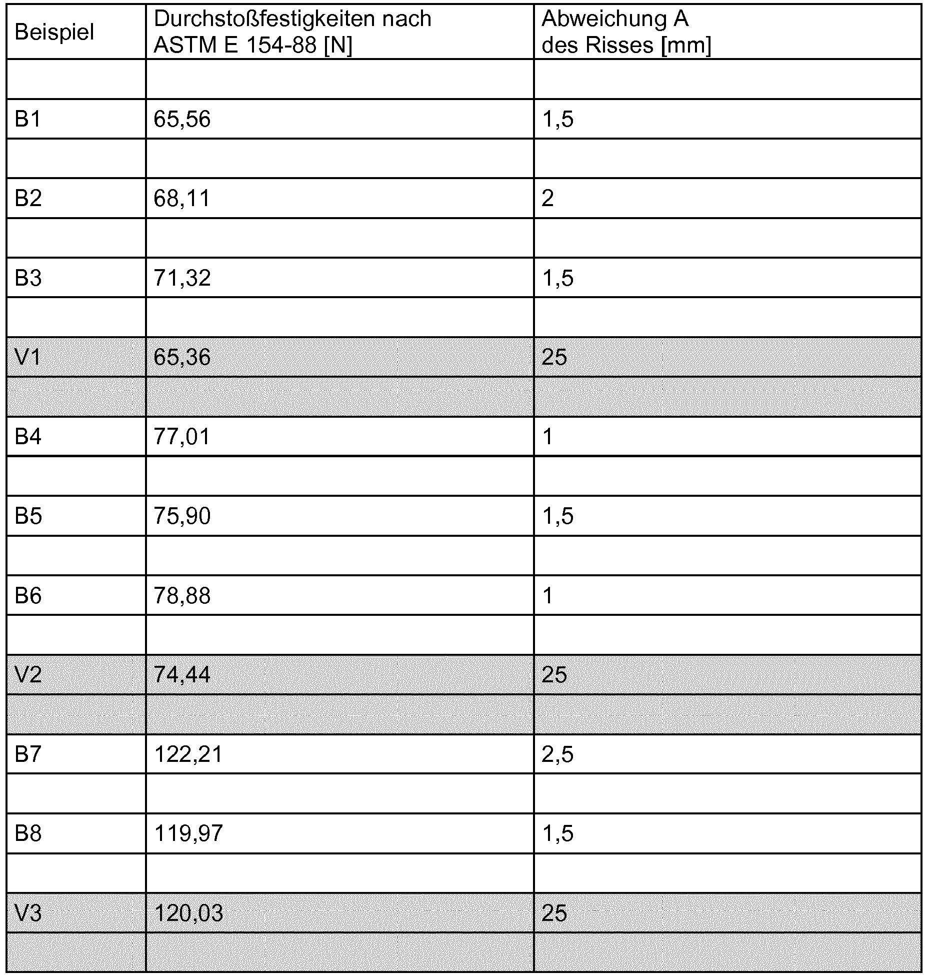

### V. Resultate

Die in den Tabellen III und IV aufgeführten Ergebnisse der erfindungsgemäßen Polyolefinfolien zeigen, dass diese Folien eine ausgezeichnete Zugfestigkeit trotz geringer Weiterreißfestigkeit in CD aufweisen, so dass sie als Verpackungsfolien zur Herstellung von Verpackungen mit ausgezeichnetem Öffnungsverhalten, ebenso wie zum Einsatz und zur Verwendung als leicht zu trennende Trenn- bzw. Schutzfolien geeignet sind. Weiterhin zeigen diese Ergebnisse, dass sich die erfindungsgemäßen Polyolefinfolien beim Öffnen durch einen linearen, geraden Verlauf des Risses auszeichnen, neben einer ausgezeichneten Durchstoßfestigkeit.

## Patentansprüche

1. Eine mehrschichtige Polyolefinfolie umfassend eine Schichtfolge aus
a) einer siegelbare Schicht (a) mit einer Schichtdicke von 5 - 30 µm basierend auf einer Polyethylen-Komponente mit einer Dichte im Bereich von 0,910 bis 0,940 g/cm³ und einem Schmelzpunkt im Bereich von 110 °C bis 130 °C,
b) einer Schicht (b) mit einer Schichtdicke von 20 - 90 µm basierend auf einer Polymermischung aus 51 - 85 Gew.-% wenigstens eines Polyethylens mit einer Dichte von 0,910 bis 0,940 g/cm³ und 15 - 49 Gew.-%, jeweils bezogen auf das Gesamtgewicht der Polymermischung, wenigstens eines Propylen-Homo- oder - Copolymeren,
c) einer siegelbaren Schicht (c) mit einer Schichtdicke von 5 - 30 µm basierend auf einer Polyethylen-Komponente mit einer Dichte im Bereich von 0,910 bis 0,940 g/cm³ und einem Schmelzpunkt im Bereich von 110 °C bis 130 °C,
wobei der Schmelzpunkt der Schicht (a) bzw. der Schicht (c) um mindestens 5°C tiefer liegt als der Schmelzpunkt der Schicht (b),
wobei die Weiterreißfestigkeit der Polyolefinfolie in Maschinenrichtung [MD] ≤ 5 N beträgt und die Weiterreißfestigkeit quer zur Maschinenrichtung [CD] um mindestens das Vierfache höher ist als in [MD], jeweils gemessen nach DIN 53356, und die Zugfestigkeit ungefähr gleich groß in Maschinenrichtung [MD] wie quer zur Maschinenrichtung [CD] ist und jeweils ≥ 15 N, gemessen nach DIN ISO 527-3, beträgt.

2. Eine Polyolefinfolie nach Anspruch 1, **dadurch gekennzeichnet, dass** die Polyethylen-Komponente der Schicht (a) aus wenigstens einem Polyethylen mit niedriger Dichte (LDPE), wenigstens einem linearen Polyethylen niedriger Dichte (LLDPE) oder einer Mischung aus LDPE und LLDPE besteht.

3. Eine Polyolefinfolie nach Anspruch 1 oder 2, **dadurch gekennzeichnet, dass** die Polyethylen-Komponente der Schicht (a) und der Schicht (c) eine identische oder unterschiedliche Zusammensetzung, vorzugsweise eine identische Zusammensetzung, aufweist.

4. Eine Polyolefinfolie nach einem der Ansprüche 1 bis 3, **dadurch gekennzeichnet, dass** die Polyethylen-Komponente der Schicht (a) und der Schicht (c) aus einer Mischung von 55 - 80 Gew.-% LDPE und 45 - 20 Gew.-% LLDPE, vorzugsweise 65 - 75 Gew. % LDPE und 35 - 25 Gew.-% LLDPE, besteht.

5. Eine Polyolefinfolie nach einem der Ansprüche 1 bis 4, **dadurch gekennzeichnet, dass** die Schicht (b) auf einer Polymermischung aus 51 - 85 Gew.-% wenigstens eines Polyethylens mit einer Dichte im Bereich von 0,910 bis 0,940 g/cm³ und einem Schmelzpunkt im Bereich von 110 °C bis 130 °C und aus 15 - 49 Gew.-% eines Propylen-Homo- oder -Copolymeren basiert.

6. Eine Polyolefinfolie nach einem der Ansprüche 1 bis 5, **dadurch gekennzeichnet, dass** das Polyethylen der Schicht (b) ein Polyethylen niedriger Dichte (LDPE) oder ein lineares Polyethylen niedriger Dichte oder eine Mischung aus LDPE und LLDPE ist.

7. Eine Polyolefinfolie nach einem der Ansprüche 1 bis 6, **dadurch gekennzeichnet, dass** das Propylencopolymere der Schicht (b) ein Propylen-/Ethylen-Copolymeres, vorzugsweise ein Propylen-/Ethylen-(Block)-Copolymeres, besonders bevorzugt ein Propylen-/Ethylen-(Block)-Copolymeres mit bis zu höchstens 20 Gew.-%, vorzugsweise ≤ 15 Gew.-% Ethylen, ist.

8. Eine Polyolefinfolie nach einem der Ansprüche 1 bis 7, **dadurch gekennzeichnet, dass**
i) die Polymermischung der Schicht (b) aus einem LDPE und aus einem Propylen-/Ethylen-Block-Copolymeren oder aus einem LLDPE und aus Propylen-/Ethylen-Block-Copolymeren besteht; oder
ii) die Polymermischung der Schicht (b) aus einer Mischung aus LDPE und aus einem Propylen-Homopolymeren oder aus LLDPE und aus einem Propylen-Homopolymeren besteht.

9. Eine Polyolefinfolie nach einem der Ansprüche 1 bis 8, **dadurch gekennzeichnet, dass** die Polymermischung der Schicht (b) 20 - 49,0 Gew.-%, bevorzugt 25 - 49,0 Gew.-% Propylen-Homo- oder -Copolymer, neben dem PE-Anteil aufweist.

10. Eine Polyolefinfolie nach einem der Ansprüche 1 bis 9, **dadurch gekennzeichnet, dass** die als Blasfolie produzierte Polyolefinfolie nicht gereckt oder monoaxial in MD, vorzugsweise wenigstens mit einem Faktor 1:2 bis 1:3, gereckt ist.

11. Eine Polyolefinfolie nach einem der Ansprüche 1 bis 10, **dadurch gekennzeichnet, dass** die Polyolefinfolie bedruckt und/oder geprägt ist.

12. Eine Verwendung einer Polyolefinfolie nach einem der Ansprüche 1 bis 11 als Verpackungsfolie, vorzugsweise zum Verpacken von Nahrungsmittel.

13. Eine Verpackung aus einer Polyolefinfolie nach einem der Ansprüche 1 bis 11 vorzugsweise für Lebensmittel, ganz besonders bevorzugt für gefrorene Lebensmittel.

14. Eine Polyolefinfolie nach einem der Ansprüche 1 bis 11, **dadurch gekennzeichnet, dass** eine Oberflächenschicht (a) oder (c) eine Release-Beschichtung, vorzugsweise aus ausgehärtetem Polysiloxan, aufweist.

15. Eine Verwendung einer Polyolefinfolie nach Anspruch 14 als Trennfolie oder Verpackungsfolie, vorzugsweise zur individuellen Verpackung von Produkten für einen Einmalgebrauch, insbesondere von klebefähigen Hygieneartikeln für den Einmalgebrauch.

## Claims

1. Multilayer polyolefin film comprising a layer sequence of
a) a sealable layer (a) having a layer thickness of 5-30 µm based on a polyethylene component having a density in the range from 0.910 to 0.940 g/cm³ and a melting point in the range from 110°C to 130°C,
b) a layer (b) having a layer thickness of 20-90 µm based on a polymer mixture of 51-85 wt% of at least one polyethylene having a density of 0.910 to 0.940 g/cm³ and 15-49 wt%, based in each case on the total weight of the polymer mixture, of at least one propylene homopolymer or copolymer,
c) a sealable layer (c) having a layer thickness of 5-30 µm based on a polyethylene component having a density in the range from 0.910 to 0.940 g/cm³ and a melting point in the range from 110°C to 130°C,
where the melting point of the layer (a) and/or of the layer (c) is at least 5°C lower than the melting point of the layer (b),
where the tear propagation resistance of the polyolefin film in machine direction [MD] is ≤ 5 N and the tear propagation resistance crosswise to the machine direction [CD] is at least four times higher than in [MD], measured in each case according to DIN 53356, and the tensile strength is of approximately equal magnitude in machine direction [MD] as crosswise to the machine direction [CD] and is ≥ 15 N, measured according to DIN ISO 527-3.

2. Polyolefin film according to Claim 1, **characterized in that** the polyethylene component of the layer (a) consists of at least one low-density polyethylene (LDPE), at least one linear low-density polyethylene (LLDPE) or a mixture of LDPE and LLDPE.

3. Polyolefin film according to Claim 1 or 2, **characterized in that** the polyethylene component of the layer (a) and of the layer (c) has an identical or different composition, preferably an identical composition.

4. Polyolefin film according to any of Claims 1 to 3, **characterized in that** the polyethylene component of the layer (a) and of the layer (c) consists of a mixture of 55-80 wt% LDPE and 45-20 wt% LLDPE, preferably 65-75 wt% LDPE and 35-25 wt% LLDPE.

5. Polyolefin film according to any of Claims 1 to 4, **characterized in that** the layer (b) is based on a polymer mixture of 51-85 wt% of at least one polyethylene having a density in the range from 0.910 to 0.940 g/cm³ and a melting point in the range from 110°C to 130°C and of 15-49 wt% of a propylene homopolymer or copolymer.

6. Polyolefin film according to any of Claims 1 to 5, **characterized in that** the polyethylene of the layer (b) is a low-density polyethylene (LDPE) or a linear low-density polyethylene or a mixture of LDPE and LLDPE.

7. Polyolefin film according to any of Claims 1 to 6, **characterized in that** the propylene copolymer of the layer (b) is a propylene/ethylene copolymer, preferably a propylene/ethylene (block) copolymer, more preferably a propylene/ethylene (block) copolymer having up to at most 20 wt%, preferably ≤ 15 wt%, of ethylene.

8. Polyolefin film according to any of Claims 1 to 7, **characterized in that**
i) the polymer mixture of the layer (b) consists of an LDPE and of a propylene/ethylene block copolymer or of an LLDPE and of propylene/ethylene block copolymer; or
ii) the polymer mixture of the layer (b) consists of a mixture of LDPE and of a propylene homopolymer or of LLDPE and of a propylene homopolymer.

9. Polyolefin film according to any of Claims 1 to 8, **characterized in that** the polymer mixture of the layer (b) has 20-49.0 wt%, preferably 25-49.0 wt%, of propylene homopolymer or copolymer, in addition to the PE fraction.

10. Polyolefin film according to any of Claims 1 to 9, **characterized in that** the polyolefin film, produced as a blown film, is unoriented or is oriented monoaxially in MD, preferably at least with a factor of 1:2 to 1:3.

11. Polyolefin film according to any of Claims 1 to 10, **characterized in that** the polyolefin film is printed and/or embossed.

12. Use of a polyolefin film according to any of Claims 1 to 11 as packaging film, preferably for the packaging of food.

13. Packaging comprising a polyolefin film according to any of Claims 1 to 11 preferably for comestibles, especially preferably for frozen comestibles.

14. Polyolefin film according to any of Claims 1 to 11, **characterized in that** a surface layer (a) or (c) has a release coating, preferably of cured polysiloxane.

15. Use of a polyolefin film according to Claim 14 as release film or packaging film, preferably for the individual packaging of products for single use, more particularly of adhesive hygiene articles for single use.

## Revendications

1. Film de polyoléfine multicouche, comprenant une succession de couches constituée par :
a) une couche scellable (a) d'une épaisseur de couche de 5 à 30 µm à base d'un composant polyéthylène ayant une densité dans la plage allant de 0,910 à 0,940 g/cm³ et un point de fusion dans la plage allant de 110 °C à 130 °C,
b) une couche (b) d'une épaisseur de couche de 20 à 90 µm à base d'un mélange de polymères constitué par 51 à 85 % en poids d'au moins un polyéthylène ayant une densité de 0,910 à 0,940 g/cm³ et 15 à 49 % en poids, à chaque fois par rapport au poids total du mélange de polymères, d'au moins un homo- ou copolymère de propylène,
c) une couche scellable (c) d'une épaisseur de couche de 5 à 30 µm à base d'un composant polyéthylène ayant une densité dans la plage allant de 0,910 à 0,940 g/cm³ et un point de fusion dans la plage allant de 110 °C à 130 °C,
le point de fusion de la couche (a) ou de la couche (c) étant au moins 5 °C plus bas que le point de fusion de la couche (b),
la résistance à la propagation d'une déchirure du film de polyoléfine dans le sens machine [MD] étant ≤ 5 N, et la résistance à la propagation d'une déchirure perpendiculairement au sens machine [CD] étant au moins quatre fois plus élevée que dans le sens machine [MD], à chaque fois mesurée selon DIN 53356, et la résistance à la traction étant approximativement égale dans le sens machine [MD] et perpendiculairement au sens machine [CD] et à chaque fois ≥ 15 N, mesurée selon DIN ISO 527-3.

2. Film de polyoléfine selon la revendication 1, **caractérisé en ce que** le composant polyéthylène de la couche (a) est constitué par au moins un polyéthylène basse densité (LDPE), au moins un polyéthylène linéaire basse densité (LLDPE) ou un mélange de LDPE et de LLDPE.

3. Film de polyoléfine selon la revendication 1 ou 2, **caractérisé en ce que** le composant polyéthylène de la couche (a) et de la couche (c) présentent une composition identique ou différente, de préférence une composition identique.

4. Film de polyoléfine selon l'une quelconque des revendications 1 à 3, **caractérisé en ce que** le composant polyéthylène de la couche (a) et de la couche (c) est constitué par un mélange de 55 à 80 % en poids de LDPE et 45 à 20 % en poids de LLDPE, de préférence 65 à 75 % en poids de LDPE et 35 à 25 % en poids de LLDPE.

5. Film de polyoléfine selon l'une quelconque des revendications 1 à 4, **caractérisé en ce que** la couche (b) est à base d'un mélange de polymères constitué par 51 à 85 % en poids d'au moins un polyéthylène ayant une densité dans la plage allant de 0,910 à 0,940 g/cm³ et un point de fusion dans la plage allant de 110 °C à 130 °C, et 15 à 49 % en poids d'un homo- ou copolymère de propylène.

6. Film de polyoléfine selon l'une quelconque des revendications 1 à 5, **caractérisé en ce que** le polyéthylène de la couche (b) est un polyéthylène basse densité (LDPE) ou un polyéthylène linéaire basse densité ou un mélange de LDPE et de LLDPE.

7. Film de polyoléfine selon l'une quelconque des revendications 1 à 6, **caractérisé en ce que** le copolymère de propylène de la couche (b) est un copolymère de propylène/éthylène, de préférence un copolymère (séquencé) de propylène/éthylène, de manière particulièrement préférée un copolymère (séquencé) de propylène/éthylène contenant au plus jusqu'à 20 % en poids, de préférence ≤ 15 % en poids, d'éthylène.

8. Film de polyoléfine selon l'une quelconque des revendications 1 à 7, **caractérisé en ce que**
i) le mélange de polymères de la couche (b) est constitué par un LDPE et un copolymère séquencé de propylène/éthylène ou par un LLDPE et un copolymère séquencé de propylène/éthylène ; ou
ii) le mélange de polymères de la couche (b) est constitué par un mélange de LDPE et d'un homopolymère de propylène ou de LLDPE et d'un homopolymère de propylène.

9. Film de polyoléfine selon l'une quelconque des revendications 1 à 8, **caractérisé en ce que** le mélange de polymères de la couche (b) comprend 20 à 49,0 % en poids, de préférence 25 à 49,0 % en poids, d'un homo- ou copolymère de propylène, en plus de la proportion de PE.

10. Film de polyoléfine selon l'une quelconque des revendications 1 à 9, **caractérisé en ce que** le film de polyoléfine produit sous la forme d'une feuille soufflée n'est pas étiré ou est étiré monoaxialement dans le sens machine [MD], de préférence au moins avec un facteur de 1:2 à 1:3.

11. Film de polyoléfine selon l'une quelconque des revendications 1 à 10, **caractérisé en ce que** le film de polyoléfine est imprimé et/ou gaufré.

12. Utilisation d'un film de polyoléfine selon l'une quelconque des revendications 1 à 11 en tant que film d'emballage, de préférence pour l'emballage de nourriture.

13. Emballage en un film de polyoléfine selon l'une quelconque des revendications 1 à 11, de préférence pour des denrées alimentaires, de manière tout particulièrement préférée pour des denrées alimentaires congelées.

14. Film de polyoléfine selon l'une quelconque des revendications 1 à 11, **caractérisé en ce qu'**une couche de surface (a) ou (c) comprend un revêtement antiadhérent, de préférence en polysiloxane durci.

15. Utilisation d'un film de polyoléfine selon la revendication 14 en tant que film de séparation ou film d'emballage, de préférence pour l'emballage individuel de produits à usage unique, notamment d'articles d'hygiène adhésifs à usage unique.
